# EUROPEAN PATENT SPECIFICATION

(11) **EP 1 287 748 B1**
(45) Date of publication and mention of the grant of the patent: **01.12.2004**
(21) Application number: 02078625.7
(22) Date of filing: 03.09.2002
(51) Int. Cl.: A23L 1/0522, A23L 1/0534, A23L 1/0532, A23L 1/054, A23L 1/19, A23L 1/187, A21D 13/08, A23C 9/154

(54) **Gellable, shelf-stable liquid food based on starch, cellulose derivative and heat-reversible hydrocolloid**
Flüssiges, lagerstabiles, gelierbares Nahrungsmittel auf Basis von Stärke, Cellulosederivaten und thermoreversiblem Hydrokolloid
Aliment liquide stable à l'entreposage et gélifiable, à base d'amidon, de dérivé de cellulose, et d'hydrocolloide réversible à la chaleur

(30) Priority: 04.09.2001 NL 1018884
(43) Date of publication of application: 05.03.2003
(73) Proprietor: Friesland Brands B.V., 8937 AC Leeuwarden (NL)
(72) Inventor: Clauwaert, Werner Marie Camiel, 1702 Groot Bijgaarden (BE); Carmans, Anne Louise Alfonsine, 3560 Lummen (BE); Braakhekke, Marcel, 5645 GD Eindhoven (NL)
(74) Representative: Prins, Adrianus Willem, Mr. Ir.

(56) References cited:
- EP-A- 1 080 646
- WO-A-97/48402
- FR-A- 1 565 844
- US-A- 5 360 625
- MONZO M ET AL: "HOW TO USE UHT-STABLE FLAVORS IN: ASEPTIC DESSERTS" FOOD ENGINEERING, ALBANY, NY, US, vol. 9, no. 56, September 1984 (1984-09), pages 58-59, XP008003534 ISSN: 0015-637X

## Description

This invention relates to a liquid food, to a method for the manufacture of this liquid food, and to the use thereof in pastry, desserts, and the like.

In the food industry, there is a great need for gel forming products, for instance for use in pastry, desserts, and the like, that obtain a firm structure under the influence of a heat treatment.

Many kinds of confectionery contain pastry filling, including the so-called pastry cream, crème patissière or yellow cream, as a tasty filling. Conventionally, this filling is applied after the pastry has been baked. The conventional procedure for the baker accordingly comprises preparing the dough, baking it in the desired form and design, and subsequently preparing the filling and filling the pastry.

With the rise of pastry factories, where large amounts of products are prepared, the point is to find a method for the preparation of these fillings that couples maximum preservation of the properties of the conventional pastry filling with a relatively high convenience of use. The large amounts necessitate optimization.

What plays a role here are physical properties that are important for processing, such as gel strength, flow properties, and the like, as well as the possibility of hygienically processing the large quantities of filling and pastry referred to.

Well known is the liquid yellow cream; a product which is prepared by the supplier in liquid ready-for-use final composition, UHT-heated, and is supplied to the pastry preparer. By whipping the product in appropriate equipment (for instance a Mondomix™ mixer) and adding a final gel forming addition (such as gelatin), the preparer must bring the product into a thick-liquid condition, proceed to apply it in or on the pastry, whereafter the product gels after some time. These products are not suited to be baked along with the pastry.

Also known are ready-for-use yellow creams in the form of a solid gel block. The customer can cut these blocks to the desired size, whereafter the resultant pieces are likewise to be whipped (for instance in a Hobart™ mixer) so as to introduce air. These products are not suited to be baked either.

In addition, there are powdered mixtures, where the pastry preparer, by mixing the powder product with water and optionally heating the mixture, obtains a base product similar to the liquid fillings mentioned earlier. Liquid products based on these powdered mixtures that have already been mixed with water are sometimes also supplied in ready-for-use form. These products based on a powder are characterized by a rather high viscosity, typically from 35 to 125 Pa·s (at 5°C and 10 sec⁻¹), and thus cannot be properly processed. These products may be capable of withstanding baking, that is, the filling can be applied onto a pastry base still to be baked. The gel structure is so firm that the baking process has no essential influence on the structure.

More in detail, in WO-A-97/48402 a specific cross-linked bacterial cellulose is described, which cellulose, according to this document, differs from "conventional cellulose from plants". The said specific cellulose substantially retains its viscosity during heating and in fact its viscosity increases slightly. In one of the working examples, a fruit-based bakery filling is described that beside the said specific cellulose also contains a gellan gum or alginate, carboxymethyl cellulose and a modified starch. FR-1.565.844 describes a ready-to-use pudding packed in paperboard, which pudding is prepared by mixing milk, aroma, sugar and a thickener, which thickener can be a combination of carboxymethyl cellulose, gelatine and a galactomannan ("farine de caroubier"), preheating to solubilize the thickener, pasteurising at a high temperature for a short time, homogenizing, controlled cooling and packaging.
EP-A-0 768 043 relates to a diabetic nutritional product.. This product contains several types of carbohydrates including fibers. One of the fiber types is modified cellulose having a glycemic index 2. In one of the examples a pudding is described containing modified corn starch, carrageenan and cellulose.
WO-A-01/19203 and US-A-5,976,586 teach food glaze products. Said international patent application describes high sugar products not containing any milk dry solids. As possible thickeners to be used in these glazes, cellulose and starch are mentioned. Cellulose derivates forming a gel upon heating are not disclosed. In the said US patent, compositions that are protein-free and eggless, and contain one or more natural or modified vegetable gums are disclosed.
In US-A-5,789,004, stabilizer compositions are described on the basis of microcrystalline cellulose coprocessed with guar in combination with microcrystalline cellulose coprocessed with carboxymethylcellulose.

Finally, reference is made to an article titled: "How to use UHT-stable flavours in aseptic desserts", as published in Food Engineering 56(9) (1984), 58-59. This article teaches a pudding containing starch, carrageenan and carboxymethyl cellulose (cellulose gum 7HF).

The fillings referred to contain a number of essential components. The products are prepared from water or an aqueous emulsion, and conventionally on the basis of milk. Added are starch and binders to accomplish the desired viscosity and gel formation, whilst coloring and flavoring can be added for adjustment of appearance and taste, as far as necessary and desired.

A great disadvantage of the known filling products which are applied to the pastry after the baking of the pastry base is the risk of bacterial contamination. In addition, in a technical sense, it is not favorable to a proper dosing progress (in particular in large-scale industrial pastry making) when the separately prepared products, pastry base and filling, are to be subsequently put together, when on the one hand the pastry may not be optimal in firmness or temperature while on the other hand the filling, after the preparation, is setting again, so that dosing proceeds successfully in the beginning but by the end of a batch often proceeds with extreme difficulty.

The above-mentioned products that are to be applied prior to the baking process do not have the drawback of the bacteriological risks, since these products are heated during the baking process. In these products, however, the end structure of the product is already present at the moment when dosing is yet to take place. That is a difficult and often failure-susceptible process step for an industrial baking process.

It is to be realized here that in the above-discussed situations always a relatively large portion of the filling product is lost or may be lost as a result of improper handling during preparation, dosing, or finishing of the pastry.

The object of the present invention is to provide a liquid food, such as a pastry filling, which can be used, for instance, to provide an as yet unbaked, shaped dough with a still liquid filling. The liquid food according to the invention should have a good shelf stability and good dosing properties.

It is not an aim of the present invention to merely provide a liquid food that gels in its package; the invention aims at providing a liquid food that remains liquid after preparation and hence during storage, and that is - in the intended use - processed in food products that need to be baked, and that gels to the desired final consistency upon cooling.

Moreover, the liquid food should withstand baking and should not boil over during baking, while after the eventual baking process the definitive firm structure should be obtained.

It has been found that this objective can be achieved with a liquid food which comprises a combination of thermoreversible gel forming hydrocolloids and hydrocolloids based on cellulose derivative, together with native and/or modified starch. Thermoreversible gel forming hydrocolloids are understood to be additives that give rise to the formation of a thermoreversible gel, that is, a gel which liquefies upon a temperature increase (up to a certain maximum temperature, of course) and gels (solidifies) upon a temperature decrease, while this process of liquefaction and gelling under the influence of the temperature is reversible. Accordingly, the present invention relates to a liquid, shelf stable food, which comprises water, native and/or modified starch, thermoreversible gel forming hydrocolloid, and hydrocolloid based on a cellulose derivative , said hydrocolloid comprising hydroxypropylmethyl cellulose and/or methyl cellulose, and, if desired, dry milk constituents and fat.

In order to obtain a shelf stable pastry filling or other liquid food, it is necessary to heat the solution or the dispersion (obtained by mixing the above-mentioned components), for instance in a UHT heating step.
A problem here is that the thermoreversible gel forming hydrocolloid upon cooling will form a gel, so that the product will have too high a viscosity to be properly dosable. It has been found that if during cooling, after the heating step, the product according to the invention is subjected to shear forces, for instance by stirring, the product preserves the flow properties favorable to dosing. Very suitably, this can be accomplished in that the liquid product, after the heating step, is cooled while flowing, the flow of the product providing the required shear forces. If desired, the product can thereupon be cooled further with stirring. A suitable manner for applying the required shear forces is, for instance, the use of a horizontal aseptic tank which is provided with a spiral screw mixing gear, for instance the Tetra Pal Alfase™.

In a second aspect, the present invention relates to a method for manufacturing a liquid, shelf stable food, wherein a mixture of water, dry milk constituents, fat, native and/or modified starch, thermoreversible gel forming hydrocolloid, and hydrocolloid based on cellulose derivative, said hydrocolloid comprising hydroxypropylmethyl cellulose and/or methyl cellulose, is subjected to a temperature increase, so that the mixture is sterilized, whereafter the mixture is cooled under the influence of shear, if desired followed by a step wherein said shear is continued without cooling. In a third aspect, the present invention relates to a product obtainable by the method of the present invention as described in the previous paragraph. In yet another embodiment, the invention relates to a method for the manufacture of pastry, desserts, and the like, wherein the liquid food according to the invention is applied in liquid form as a pastry filling on or in a starting product, or as starting product, whereafter the starting product is heated, and subsequently is cooled, whereafter said pastry filling obtains the desired consistency.

A product having flow properties favorable to dosing is here understood to be a product which is properly dosable, that is, a product that can be easily dosed (possibly after pumping) with (industrial) means. Properly dosable is a product that does not need to be spread, in other words a product that does not require the use of a blade or spatula to obtain a proper distribution thereof. Possibly, however, a little pressing-on may be necessary. Preferably, the pastry filling or other liquid food according to the invention is free flowing, that is, it accommodates under the sole influence of gravity to the shape in which it is being poured, yielding a substantially level and horizontal liquid surface. The basic viscosity (that is, the viscosity of the liquid product according to the invention such as it is supplied, for instance, to an industrial bakery) is preferably 2-20 Pa·s, more preferably 8-15 Pa·s, and most preferably 10-14 Pa·s (viscosities measured on a Physica MCR 300 Modular Compact Rheometer viscosimeter at 5°C, measured body pp50 at 10 sec⁻¹).

The thermoreversible gel forming hydrocolloid comprises preferably gellan gum, carrageen (in particular κ- and/or τ-carrageen) and/or agar.

Preferably, the liquid food according to the invention is an aqueous solution or suspension of the ingredients mentioned in the amounts specified hereinafter.

Starch (native and/or modified): 0.5-10 wt.%, more preferably 2-10 wt.%, and most preferably 3-7 wt.%. The starch partly gives the desired firmness of the filling in the end product after it has been applied as, for instance, a filling in a cake or as a dessert (that is, after heating and cooling at the end user, for instance as cake filling). Both native starch, such as, for instance, potato starch, and chemically or physically modified starch types can be used, alone or in combination. In the case of chemically modified starch types, especially the H and/or R types are suitable. Also highly suitable is adipate crosslinked and acetate-stabilized waxy maize.

Thermoreversible gel forming hydrocolloid: 0.1-1 wt.%, more preferably 0.2-0.8 wt.%, and most preferably 0.3-0.5 wt.%. This component provides for the desired gelling and thus, together with the starch, determines the eventual consistency of the product after it has been baked. It is of importance that this component is thermoreversible, that is, gives rise to the formation of a thermoreversible gel, which liquefies upon a temperature increase and gels upon a temperature decrease, as described above. Hydrocolloids such as alginates do not give a thermoreversible gel and for this reason are not suitable.

Hydrocolloid based on cellulose derivative: 0.1-4 wt.%, more preferably 0.2-3 wt.% and most preferably 0.5-1 wt.%. The hydrocolloid based on cellulose derivative comprises hydroxypropylmethyl-cellulose and/or methylcellulose.

Dry milk constituents: 0-10 wt.%, more preferably 2-8 wt.%, and most preferably 4-7 wt.%. In the past, milk was the normal basis for the preparation of the fillings mentioned. Hence, most recipes also have milk dry matter as an ingredient.

Fat: 0-20 wt.%, more preferably 5-15 wt.%, and most preferably 7-10 wt.%. Both vegetable and animal fat are suitable, as well as combinations thereof. Animal fat can originate, for instance, from milk (milk fat). Also, instead, or in addition thereto, vegetable fat can be used. If vegetable fat is used, preferably an emulsifier is used as well.

Optionally, to the liquid food according to the invention, the conventional colors, flavors and sweeteners can be added.

A method for manufacturing a liquid, shelf stable food according to the invention comprises providing a mixture of water, dry milk constituents, fat, native and/or modified starch, thermoreversible gel forming hydrocolloid, and hydrocolloid based on cellulose derivative, and subjecting this mixture to a temperature increase, so that the mixture is sterilized, whereafter the mixture is cooled under the influence of shear (for instance by stirring and/or causing it to flow).

Preferably, mixing of the ingredients is done at increased temperature, because the mixing process then proceeds considerably more easily. Preferably, mixing is carried out at a temperature of 55-65°C. Next, the mixture can be heated to, for instance, 70°C, to obtain a suitable consistency for the heating step.

The heating step can be very suitably carried out with the aid of steam injection. Preferably, the heating step is a UHT heating step, whereby the product is heated, for instance, for 6 sec at 140°C.

After the heating step, the product, as stated, is to be cooled under the influence of shear to *ca.* 20°C. With advantage, this cooling is done in at least two steps, where in a first step, for instance by flash-cooling, the product is cooled to *ca.* 70 to 80°C, while the injected steam is recovered in the form of water. Thereupon, the product can then be cooled, for instance while flowing or under the influence of stirring, to 20°C. If desired, cooling may be followed by further stirring in the aseptic tank (without cooling) for up to *ca.* 60 min, typically for *ca*. 10-30 min, in order to break down the gel still further. After that, the product is filled.

The possible use of emulsifiers is a consequence of the transition to the use of non-milk components, which involves in particular the replacement of the relatively expensive milk fat with a fat of vegetable origin.

The invention provides a product that can already before the baking process, in still liquid condition, be administered to, for instance, pre-formed dough, whereafter the baking process not only leads to a baked end product but also yields a tasty, firm filling. The great advantage is the simple manner of dosing, which guarantees an extremely accurately adjustable uniform dose of the filling product at a moment when any bacterial contamination arising during dosing will have no appreciable consequences for the quality of the end product, since the baking process is yet to follow.

Essential to the product according to the invention is that after formulating the product in liquid form in a manner known to those skilled in the art, there follows a sterilization step, for instance an UHT heating step, so that the product is sterilized.

Gelling is prevented by continued subjection of the product, during cooling, to shear forces, for instance by stirring. The sterile, still liquid mass is ready for delivery to the end user.

The end user can simply dose the desired amount of filling to the pastry bases (or comparable dough products) yet to be baked. After the baking process - whereby the filling also undergoes a heating again - the end product cools down. Because that does not involve stirring, the filling sets to its desired end consistency.

Boiling over of the filling during the baking process is prevented by making the viscosity of the applied filling so high that no real boiling will be involved. This is achieved by addition of the hydrocolloid based on a cellulose derivative that thickens at high temperature, that is, above 60°C and preferably above 80°C, for instance, and in particular, hydroxypropylmethylcellulose and/or methylcellulose. These additives, while most hydrocolloidal gels weaken or melt at higher temperatures, have the remarkable property of thickening a higher temperatures. Such cellulose derivatives are used in EP-A-0 689 770 for realizing a constant viscosity in a limited temperature range, so that, for instance, a sauce is obtained which upon heating possesses the same viscosity as when served.

As stated, for setting the basic viscosity, starch is used, while the eventual gel formation is based on addition of the thermoreversible gel forming hydrocolloid.

The liquid food according to the invention can be applied on or in a suitable starting product, for instance a (partly) unbaked cake base, or other form of pastry base which is still to undergo a final baking step. It is also possible to use the liquid food itself as a starting product, that is, without first applying it to a cake base or like baking products. This is practically implemented by offering the liquid food in a suitable container, for instance a pot. The contents can then be heated right before consumption, for instance at home by the consumer. Heating can very suitably take place in the microwave oven. In this way, a pudding, for instance a crème brûlée, a flan-caramel or a flan-cake can be made.

After heating of the starting product, followed by cooling, the liquid food obtains the desired consistency.

The invention is further illustrated in and by the following examples.

### Example 1

A pastry filling for use as liquid crème pâtissière was prepared by mixing the following ingredients in the specified amounts.

| Raw materials | wt. % |
|---|---|
| Water | 33 |
| Skim milk | 40.64 |
| Milk dry matter | 2.325 |
| Fat | 4 |
| Sugar | 14 |
| Modified starch | 5 |
| Methylethylcellulose | 0.5 |
| Emulsifier Quest Hymono™ 1103 ¹⁾ | 0.2 |
| mixture of carrageen/gellan gum in a weight ratio of 1/7 | 0.175 |
| Color and flavor (beta-carotene and vanilla aroma) | 0.16 |

| | |
|---|---|
| 1): mixture of mono/diglycerides of fatty acids, weight ratio mono/di = 90/10. | |

The crème was prepared as follows:

The milk with the water was heated to 60°C and the fat was emulsified therein in the presence of the emulsifier.

After making the emulsion, the other raw materials were added and dissolved.

The mix was sterilized at 140°C for 6 seconds through steam injection.

After sterilization, the mix was cooled while flowing, to *ca.* 20°C and passed to an aseptic tank (type Tetra Pak Alfase™).

In the aseptic tank, the mix was stirred, after which the crème pâtissière was filled aseptically. The viscosity of the fully cooled crème was 12 Pa·s (measured on a Physica MCR 300 Modular Compact Rheometer viscosimeter at 5°C, measured body pp50 at 10 sec⁻¹).

Subsequently, the liquid crème pâtissière was dosed into the unbaked dough base. The crème pâtissière exhibited a fine flow.

Then the cake base including the filling was baked off in an oven at *ca.* 220°C for *ca.* 20 minutes.

After the cake had been baked off, it was removed from the oven. After *ca.* 10-30 minutes of cooling, the filling had beautifully set and a gel that can be cut had formed, after which the cake could be further finished with garnishing, such as fruit, whipped cream, and the like.

### Example 2.

This example describes the preparation of a dessert (crème brûlée) based on the liquid food according to the invention. According to this embodiment, the filling as such, that is, without cake base or the like, is offered for consumption.

A pastry filling was prepared by mixing the following ingredients in the specified amounts.

| Raw materials | wt.% |
|---|---|
| Cream 40% | 40 |
| Skim milk | 44.444 |
| Sugar | 13 |
| Modified starch | 2.5 |
| Color and flavor (beta-carotene and Bourbon vanilla with speckles (vanilla sticks)) | 2.515 |
| Methylethylcellulose | 0.5 |
| mixture of carrageen/gellan gum in weight ratio of 1/7 | 0.175 |

The crème is prepared by heating the skim milk and cream to 60°C. Then the other raw materials are added and the same steps are carried out as with the liquid crème pâtissière of Example 1.

The liquid crème brûlée was dosed into a small dish and placed in a conventional household microwave for *ca.* 2 min.

After cooling, a fine firm crème brûlée is obtained.

Since after cooling a skin had formed at the surface, it was no problem to sprinkle a small layer of sugar over it and to allow this layer to caramelize under the grill prior to serving.

The sugar did not dissolve in the crème because of the skin formed on the surface.

## Claims

1. A liquid, shelf stable food, comprising water, native and/or modified starch, thermoreversible gel forming hydrocolloid, hydrocolloid based on cellulose derivative, said hydrocolloid comprising hydroxypropylmethyl cellulose and/or methyl cellulose, and, if desired, dry milk constituents and/or fat.

2. A food according to claim 1, having a viscosity of 2-20 Pa·s at 5°C.

3. A food according to claim 2, having a viscosity of 5-16 Pa·s at 5°C.

4. A food according to any one of the preceding claims, wherein the thermoreversible gel forming hydrocolloid is present in an amount of 0.1-1 wt.%, preferably of 0.2-0.8 wt.%, and more preferably of 0.3-0.5 wt.%.

5. A food according to any one of the preceding claims, wherein the thermoreversible gel forming hydrocolloid comprises gellan gum, carrageen and/or agar.

6. A food according to any one of the preceding claims, wherein the hydrocolloid based on cellulose derivative is present in an amount of 0.1-4 wt.%, preferably of 0.2-3 wt.%, and more preferably of 0.5-1 wt.%.

7. A food according to any one of the preceding claims, wherein the dry milk constituents are present in an amount of 0-10 wt.%, preferably of 2-8 wt.%, and more preferably of 4-7 wt.%.

8. A food according to any one of the preceding claims, wherein the fat is present in an amount of 0-20 wt.%, preferably of 5-15 wt.%, and more preferably of 7-10 wt.%.

9. A food according to any one of the preceding claims, wherein the fat is present in an amount of 0.5-10 wt.%, preferably of 2-10 wt.%, and more preferably of 3-7 wt.%.

10. A method for manufacturing a liquid, shelf stable food, wherein a mixture of water, dry milk constituents, fat, native and/or modified starch, thermoreversible gel forming hydrocolloid, and hydrocolloid based on cellulose derivative, said hydrocolloid comprising hydroxypropylmethyl cellulose and/or methyl cellulose, is subjected to a temperature increase, so that the mixture is sterilized, whereafter the mixture is cooled under the influence of shear, if desired followed by a step wherein said shear is continued without cooling.

11. A method according to claim 10, wherein said temperature increase is carried out by heating with steam, followed by a flash-cooling step.

12. A food obtainable according to claim 10 or 11.

13. A method for the manufacture of pastry, desserts, and the like, wherein a pastry filling according to claims 1-10 or 12 is applied in liquid form on or in a starting product, or as starting product, whereafter the starting product is heated, and subsequently is cooled, whereafter said pastry filling obtains the desired consistency.

## Patentansprüche

1. Flüssiges, lagerstabiles Nahrungsmittel, aufweisend Wasser, natürliche und/oder modifizierte Stärke, hydrokolloidbildendes thermoreversibles Gel, auf Zellulosederivat basierendes Hydrokolloid, wobei das Hydrokolloid Hydroxypropylmethylzellulose und/oder Methylzellulose enthält, und, sofern gewünscht, Trockenmilchbestandteile und/oder Fett.

2. Nahrungsmittel nach Anspruch 1, mit einer Viskosität von 2 bis 20 Pa·s bei 5°C.

3. Nahrungsmittel nach Anspruch 2 mit einer Viskosität von 5 bis 16 Pa·s bei 5°C.

4. Nahrungsmittel nach einem der vorangehenden Ansprüche, bei dem das hydrokolloidbildende thermoreversible Gel in einer Menge zwischen 0,1 bis 1 Gew.-%, vorzugsweise zwischen 0,2 bis 0,8 Gew.-%, und besonders vorzugsweise zwischen 0,3 bis 0,5 Gew.-%, vorhanden ist.

5. Nahrungsmittel nach einem der vorangehenden Ansprüche, bei dem das hydrokolloidbildende thermoreversible Gel, Gellan Gummi (gellan gum), Carrageen und/oder Agar aufweist.

6. Nahrungsmittel nach einem der vorangehenden Ansprüche, bei dem das auf Zellulosederivat basierende Hydrokolloid in einer Menge von 0,1 bis 4 Gew.-%, vorzugsweise zwischen 0,2 bis 3 Gew.-% und besonders vorzugsweise zwischen 0,5 bis 1 Gew.-% vorhanden ist.

7. Nahrungsmittel nach einem der vorangehenden Ansprüche, wobei die Trockenmilchbestandteile in einer Menge zwischen 0 bis 10 Gew.-%, vorzugsweise zwischen 2 bis 8 Gew.-% und besonders vorzugsweise zwischen 4 bis 7 Gew.-% vorhanden sind.

8. Nahrungsmittel nach einem der vorangehenden Ansprüche, bei dem das Fett in einer Menge zwischen 0 bis 20 Gew.-%, vorzugsweise zwischen 5 bis 15 Gew.-%, besonders vorzugsweise zwischen 7 bis 10 Gew.-% vorhanden ist.

9. Nahrungsmittel nach einem der vorangehenden Ansprüche, bei dem das Fett in einer Menge zwischen 0,5 bis 10 Gew.-%, vorzugsweise zwischen 2 bis 10 Gew.-%, und besonders vorzugsweise zwischen 3 bis 7 Gew.-% vorhanden ist.

10. Verfahren zur Herstellung eines flüssigen, lagerstabilen Nahrungsmittels, bei dem eine Mischung aus Wasser, Trockenmilchbestandteilen, Fett, natürlicher und/oder modifizierter Stärke, hydrokolloidbildendem thermoreversiblem Gel und auf Zellulosederivat basierendem Hydrokolloid, wobei das Hydrokolloid Hydroxypropylmethylzellulose und/oder Methylzellulose umfasst, einer Temperaturerhöhung ausgesetzt wird, derart, dass die Mischung sterilisiert wird, wonach die Mischung unter dem Einfluss einer Scherkraft gekühlt wird, und, falls gewünscht, einem Schritt, bei dem der Scherkrafteinfluss ohne Kühlung fortgeführt wird.

11. Verfahren nach Anspruch 10, wobei die Temperaturerhöhung durch eine Erhitzung mit Dampf, gefolgt von einem Schnell-Kühlschritt durchgeführt wird.

12. Nahrungsmittel, das gemäß Anspruch 10 oder 11 erhaltbar ist.

13. Verfahren zur Herstellung von Gebäck, Desserts und Ähnlichem, wobei eine Gebäckfüllung nach Anspruch 1 bis 10 oder 12 in flüssiger Form auf oder in einem Ausgangsprodukt auf- bzw. eingebracht wird, oder als Ausgangsprodukt verwendet wird, wonach das Ausgangsprodukt erhitzt wird, und anschließend abgekühlt wird, wonach die Gebäckfüllung die erwünschte Konsistenz erlangt.

## Revendications

1. Aliment liquide et stable en magasin, comprenant de l'eau, un amidon naturel et/ou modifié, un hydrocolloïde formant un gel thermoréversible et un hydrocolloïde à base de dérivé de cellulose, cet hydrocolloïde comprenant de l'hydroxypropyl-méthylcellulose et/ou de la méthylcellulose, ainsi que, si l'on veut, des constituants de lait sec et/ou une matière grasse.

2. Aliment conforme à la revendication 1, dont la viscosité vaut de 2 à 20 Pa.s à 5 °C.

3. Aliment conforme à la revendication 2, dont la viscosité vaut de 5 à 16 Pa.s à 5 °C.

4. Aliment conforme à l'une des revendications précédentes, dans lequel l'hydrocolloïde formant un gel thermoréversible se trouve en une proportion pondérale de 0,1 à 1 %, de préférence de 0,2 à 0,8 %, et mieux encore de 0,3 à 0,5 %.

5. Aliment conforme à l'une des revendications précédentes, dans lequel l'hydrocolloïde formant un gel thermoréversible comprend de la gomme gellane, de la carraghénine et/ou de l'agar-agar.

6. Aliment conforme à l'une des revendications précédentes, dans lequel l'hydrocolloïde à base de dérivé de cellulose se trouve en une proportion pondérale de 0,1 à 4 %, de préférence de 0,2 à 3 %, et mieux encore de 0,5 à 1 %.

7. Aliment conforme à l'une des revendications précédentes, dans lequel les constituants de lait sec se trouvent en une proportion pondérale de 0 à 10 %, de préférence de 2 à 8 %, et mieux encore de 4 à 7 %.

8. Aliment conforme à l'une des revendications précédentes, dans lequel la matière grasse se trouve en une proportion pondérale de 0 à 20 %, de préférence de 5 à 15 %, et mieux encore de 7 à 10 %.

9. Aliment conforme à l'une des revendications précédentes, dans lequel la matière grasse se trouve en une proportion pondérale de 0,5 à 10 %, de préférence de 2 à 10 %, et mieux encore de 3 à 7 %.

10. Procédé de fabrication d'un aliment liquide et stable en magasin, dans lequel on soumet un mélange constitué d'eau, de constituants de lait sec, de matière grasse, d'amidon naturel et/ou modifié, d'un hydrocolloïde formant un gel thermoréversible et d'un hydrocolloïde à base de dérivé de cellulose, cet hydrocolloïde comprenant de l'hydroxypropyl-méthylcellulose et/ou de la méthylcellulose, à une augmentation de température de manière à stériliser le mélange, après quoi on fait refroidir le mélange tout en le soumettant à une action de cisaillement, et ensuite, si l'on veut, on poursuit cette action de cisaillement sans faire davantage refroidir le mélange.

11. Procédé conforme à la revendication 10, dans lequel ladite augmentation de température est réalisée par chauffage à l'aide de vapeur d'eau, et suivie d'une étape de refroidissement éclair.

12. Aliment préparable conformément à la revendication 11 ou 12.

13. Procédé de confection de pâtisseries, desserts et autres préparations semblables, dans lequel une garniture de pâtisserie, conforme à l'une des revendications 1 à 9 et 12, est appliquée sous forme liquide sur ou dans un produit de base, ou sert elle-même de produit de base, après quoi l'on chauffe ce produit de base et on le fait ultérieurement refroidir, à la suite de quoi ladite garniture de pâtisserie acquiert la consistance voulue.
